# EUROPÄISCHE PATENTSCHRIFT

(11) **EP 2 132 945 B1**
(45) Veröffentlichungstag und Bekanntmachung des Hinweises auf die Patenterteilung: **10.05.2017**
(21) Anmeldenummer: 08716295.4
(22) Anmeldetag: 06.03.2008
(51) Int. Cl.: H04Q 3/00

(54) **VERFAHREN UND VORRICHTUNG FÜR FIXED-MOBILE-KONVERGENTE TELEKOMMUNIKATIONSDIENSTE**
METHOD AND DEVICE FOR FIXED-MOBILE CONVERGENT TELECOMMUNICATIONS SERVICES
PROCÉDÉ ET DISPOSITIF POUR DES SERVICES DE TÉLÉCOMMUNICATION À CONVERGENCE FIXE-MOBILE

(30) Priorität: 13.03.2007 DE 102007011887
(43) Veröffentlichungstag der Anmeldung: 16.12.2009
(73) Patentinhaber: Deutsche Telekom AG, 53113 Bonn (DE); Detecon International Gmbh, 53227 Bonn (DE)
(72) Erfinder: VÖHRINGER, Gerrit, 53111 Bonn (DE); REITH, Lothar, 60596 Frankurt (DE)
(74) Vertreter: Riebling, Peter
(86) Internationale Anmeldenummer: PCT/EP2008/001779
(87) Internationale Veröffentlichungsnummer: WO 2008/110295

(56) Entgegenhaltungen:
- WO-A-2005/004452
- WO-A-2006/036641

## Beschreibung

Die Erfindung betrifft ein Verfahren und eine Vorrichtung für fixed-mobile-konvergente Telekommunikationsdienste.

Die bisherige Konstellation von Kommunikationsnetzen sieht so aus, dass es eine klare Trennung zwischen Festnetz und Mobilfunknetz gibt. Beide Netze haben eigene, fest definierte Schnittstellen und Übergänge. In Zukunft wird aber eine Verknüpfung der Netzarten angestrebt, damit man unabhängig von der benutzten Zugangstechnik per Draht oder per Funk alle Telekommunikationsdienste gleichermaßen mit einem Endgerät nutzen kann.

Derzeit können Telekommunikationsdienste und Leistungsmerkmale, nachfolgend auch Services genannt, wie beispielsweise Parallel Ringing (mit diesem Leistungsmerkmal können eingehende Gespräche parallel auf mehreren Endgeräten signalisiert werden), Hunting (Anrufverteilung, d. h. Suche nach freien Leitungen bei ISDN-Basisanschlüssen oder ISDN-Primärmultiplexanschlüssen), etc. nur in dem Originalnetz, in dem die Rufnummer geschaltet ist, kontrolliert werden. Daraus ergeben sich Nachteile in Bezug auf Vergebührung, Interworking mit Diensten in anderen Netzen, netzübergreifende Administration etc.

WO 2005/004452 A1 offenbart ein Verfahren mit den wesentlichen Merkmalen des Oberbegriffs des Anspruchs 1, bei dem ein eingehender Anruf für einen Kommunikationsanschluss parallel auf mehreren anderen Kommunikationsanschlüssen signalisiert werden kann.

Es ist die Aufgabe der Erfindung, ein Verfahren und ein System anzugeben, bei dem die Steuerung von Telekommunikationsdiensten und Leistungsmerkmalen nicht ausschließlich vom Originalnetz aus möglich ist.

Diese Aufgabe wird durch ein Verfahren mit den Merkmalen des Anspruchs 1 gelöst. Eine Vorrichtung zur Durchführung des Verfahrens ist in Anspruch 27 angegeben.

Bevorzugte Ausgestaltungen und weitere vorteilhafte Merkmale der Erfindung sind in den abhängigen Ansprüchen angegeben.

Die Erfindung betrifft ein Verfahren: wie in Anspruch 1 definiert. Mit anderen Worten ist ein Mechanismus beschrieben, mit dem die Kontrolle über die Rufzustellung zu einem Anschlussnamen, z. B. eine Rufnummer, eines ersten Netzes, beispielsweise ein Festnetz, in ein zweites Netz, beispielsweise ein Mobilfunknetz, abgegeben werden kann, indem dann die eigentliche Anreicherung durch Dienste wie paralleles Klingeln, Hunting etc. geschieht. Dies hat den Vorteil, dass die Dienste für Rufnummern sowohl des ersten als auch des zweiten Netzes symmetrisch angeboten und administriert werden können.

Vorzugsweise ist der erste Anschlussname in jedem anderen Kommunikationsnetz sowie - sofern vorhanden - in einer zentralen Einrichtung zur Namensauflösung und Namenskennzeichnung mit globaler Signifikanz als dem ersten Kommunikationsnetz zugeordnet gekennzeichnet.

Erfindungsgemäß erkennt das erste Kommunikationsnetz, dass der Anruf von der Rufsteuerfunktion des zweiten Kommunikationsnetzes kommt. Daraufhin stellt das erste Kommunikationsnetz den Anruf an den ersten Anschluss zu. In einer Ausführungsform der Erfindung basiert das Erkennen, dass der Anruf von der Rufsteuerfunktion des zweiten Kommunikationsnetzes kommt, auf der Auswertung einer speziellen Portierungskennung oder anderen ISUP-Feldern (z. B. Original Called Party oder ähnliches).

Vorzugsweise ist dem zweiten Anschluss ein Anschlussname zugeordnet, und bei Anrufen zu diesem Anschlussnamen stellt die Rufsteuerungsfunktion den Anruf ebenfalls sowohl an den zweiten Anschluss als auch an den ersten Anschluss zu.

Vorzugsweise kann die Rufsteuerungsfunktion in dem zweiten Kommunikationsnetz eine Mitteilung generieren, durch die dem Anrufenden mitgeteilt wird, dass ein paralleler Zustellversuch des Anrufs durchgeführt wird.

Es kann außerdem vorgesehen sein, dass die Rufsteuerungsfunktion in dem zweiten Kommunikationsnetz den Anruf an eine Sprachbox zustellt, wenn die Zustellversuche an den ersten Anschluss und an den zweiten Anschluss erfolglos bleiben. Hierbei kann die Zustellung an die Sprachbox nach einer vom Inhaber des konvergenten Anschlussnamen einstellbaren Zahl von Zustellversuchen (Anzahl Ringing) erfolgen.

In einer bevorzugten Ausgestaltung der Erfindung ist die Rufsteuerungsfunktion inhärent eine konvergente Rufsteuerungsfunktion, die sowohl auf die Rufsteuerung im ersten als auch im zweiten Kommunikationsnetz wirkt. Das ist ein wesentlicher Vorteil der Erfindung, da ansonsten zwei intelligente Netze eine Kundenschnittstelle erhalten müssten, die synchron zu halten bei Weiterentwicklung sehr aufwändig bis unmöglich ist, wenn - wie normal - der erste und zweite Netzbetreiber zwei unterschiedliche Organisationen sind.

Die Rufsteuerungsfunktion kann durch den Inhaber des konvergenten Anschlussnamens kontrolliert werden, sowohl über den ersten Anschluss, als auch über den zweiten Anschluss oder über ein dafür eingerichtetes Web Portal, Voice Portal, etc.
Gemäß einer ersten Möglichkeit kann der Inhaber des konvergenten ersten Anschlussnamens und des zweiten Anschlussnamens oder ein von dem Inhaber autorisierter Nutzer die Rufsteuerungsfunktion kontrollieren dergestalt, dass er Parallel Ringing einschalten und ausschalten kann, sowie bestimmen kann, ob bei einem Anruf zum zweiten Anschlussnamen der Anruf nur in das erste Kommunikationsnetz oder nur in das zweite Kommunikationsnetz oder nur zur Sprachbox zugestellt werden soll.

Eine zweite Möglichkeit besteht darin, dass der Inhaber des konvergenten ersten Anschlussnamens und des zweiten Anschlussnamens oder ein von dem Inhaber autorisierter Nutzer die Rufsteuerungsfunktion kontrollieren kann dergestalt, dass er Parallel Ringing einschalten und ausschalten kann, sowie bestimmen kann, ob bei einem Anruf zum konvergenten ersten Anschlussnamen der Anruf nur in das erste Kommunikationsnetz oder nur in das zweite Kommunikationsnetz oder nur zur Sprachbox zugestellt werden soll.

An dem beschriebenen Verfahren kann jeweils ein Mobilfunknetzbetreiber und ein Festnetzbetreiber oder aber einen integrierter Festnetz-/Mobilfunkbetreiber beteiligt sein.

Das erste und das zweite Kommunikationsnetz sind in der Regel unterschiedliche Netze, haben aber vorzugsweise dieselbe Länderkennung (CC: Country Code).

In einer möglichen Ausgestaltung der Erfindung ist das erste Kommunikationsnetz ein Festnetz, der erste Netzbetreiber ein Festnetzbetreiber, das zweite Kommunikationsnetz ein Mobilfunknetz, der zweite Netzbetreiber ist ein Mobilfunknetzbetreiber, der erste Anschlussname eine Festnetznummer und der zweite Anschlussname eine Mobilfunknummer.

In einer anderen Ausgestaltung der Erfindung ist das erste Kommunikationsnetz ein Mobilfunknetz, der erste Netzbetreiber ein Mobilfunknetzbetreiber, das zweite Kommunikationsnetz ein Festnetz, der zweite Netzbetreiber ein Festnetzbetreiber, der erste Anschlussname eine Mobilfunknummer und der zweite Anschlussname eine Festnetznummer.

In einer wieder anderen Ausgestaltung der Erfindung ist das erste Kommunikationsnetz ist ein Festnetz, der erste Netzbetreiber ein Festnetzbetreiber, das zweite Kommunikationsnetz ein Mobilfunknetz, der zweite Netzbetreiber ein Mobilfunknetzbetreiber, der erste Anschlussname eine Mobilfunknummer und der zweite Anschlussname eine Festnetznummer.

In einer nochmals anderen Ausgestaltung der Erfindung ist das erste Kommunikationsnetz ein Mobilfunknetz, der erste Netzbetreiber ein Mobilfunknetzbetreiber, das zweite Kommunikationsnetz ein Festnetz, der zweite Netzbetreiber ein Festnetzbetreiber, der erste Anschlussname eine Festnetznummer und der zweite Anschlussname eine Mobilfunknummer.

In einer wieder anderen Ausgestaltung der Erfindung ist das erste Kommunikationsnetz ist ein Festnetz, der erste Netzbetreiber ein Festnetzbetreiber, das zweite Kommunikationsnetz ein Mobilfunknetz, der zweite Netzbetreiber ein Mobilfunknetzbetreiber, der erste Anschlussname eine konvergente Rufnummer, die gleichzeitig dem Mobilfunknetz als auch dem Festnetz zuzuordnen ist, und der zweite Anschlussname eine Mobilfunknummer.

In einer weiteren Ausgestaltung der Erfindung ist das erste Kommunikationsnetz ein Mobilfunknetz, der erste Netzbetreiber ein Mobilfunknetzbetreiber, das zweite Kommunikationsnetz ein Festnetz, der zweite Netzbetreiber ein Festnetzbetreiber, der erste Anschlussname eine konvergente Rufnummer, die gleichzeitig dem Mobilfunknetz als auch dem Festnetz zuzuordnen ist, und der zweite Anschlussname eine Festnetznummer.

Zusätzliche Erweiterung: mögliche Abstraktionen und Erweiterungen sind denkbar um den Geltungsbereich auch in Richtung künftiger Architekturen wie VoIP und IMS (IP Multimedia Subsystem) zu erweitern. Insbesondere der jeweilige Anschlussname, der Teil eines Namensraums ist, kann verschiedene Begriffe beinhalten.

Der Namensraum kann z. B. der E.164 Rufnummernplan sein, also die Menge aller möglichen Telefon-Rufnummern, wodurch der Anschlussname eine Rufnummer wird.

Der Namensraum kann auch die Menge aller theoretisch möglichen SIP URIs (SIP = Session Initiation Protocol, URI = Uniform Resource Identifier) umfassen, wodurch der Anschlussname eine SIP URI wird.

Der Namensraum kann ebenfalls die Menge aller theoretisch möglichen Tel URIs umfassen, wodurch der Anschlussname eine Tel-URI wird.

Erfindungsgemäß wird der Anschlussname mit Verfahren zur Namensauflösung und Namenskennzeichnung unter Nutzung eines Namensauflösung- und Namenskennzeichnungsdienstes aufgelöst und gekennzeichnet, dergestalt, dass eine Zuordnung des Anschlussnamens erfolgt zu demjenigen Netz, dem der Anschlussnamen aktuell zugeordnet ist.

Der Namensauflösungs- und Namenskennzeichnungsdienst kann der Dienst eines Portierungsdatenbankservers, der Dienst eines ENUM Servers, oder der Dienst eines DNS Servers sein.

Durch einmaliges oder mehrmalige Namensauflösung und Namenskennzeichnung z. B. durch Kennzeichnung des Namens als aktuell zu einem anderen Netzbetreiber zugeordnet (portierter Namen mithilfe einer Portierungskennung) kann letztlich der physikalische Anschluss ermittelt werden, zu dem der Anruf zugestellt werden soll. Das Ergebnis einer Namensauflösung kann eine IP Adresse sein (IP Adresse = ein Name aus dem Namensraum IPv4 oder IPv6). Durch erneute Namensauflösung mit einem Namensauflösungsverfahren für Adressen (ARP) kann daraus der Name des physikalischen Anschlusses ermittelt werden (MAC Adresse = Name aus dem Namensraum aller MAC Adressen). Auf dem durch die MAC Adresse bezeichneten physikalischen Anschluss kann über die letztlich über die im IP Packet enthaltene Port-Nummer die logische Zustelladresse ermittelt werden, und der Anruf zugestellt werden.

Mit anderen Worten ausgedrückt ist der erste Anschlussname, der beispielsweise eine erste Rufnummer sein kann, die nach außen zwingend sichtbare konvergente Rufnummer. Der zweite Anschlussname, der beispielsweise eine zweite Rufnummer sein kann, kann sogar nach außen niemals auftauchen, sofern auch abgehende Rufe immer über die Rufsteuerung geleitet werden und diese die zweite Rufnummer durch die erste Rufnummer als Rufnummernidentifizierung (CLI: Calling Line Identification) ersetzt.

Das erste Netz hat einen ersten Anschluss und eine diesem ersten Anschluss zugeordnete erste Rufhummer, und das zweite Netz hat einen zweiten Anschluss und eine diesem zweiten Anschluss zugeordnete zweite Rufhummer.
Das erste Netz möchte aus Konvergenzgründen die Rufsteuerung an das zweite Netz delegieren, damit aus dem zweiten Netz Parallel Ringing gesteuert werden kann. Hierzu erfolgt im zweiten Netz eine Zuordnung der ersten Rufnummer zu der zweiten Rufnummer. Gegebenenfalls erfolgt auch die umgekehrte Zuordnung, falls als CLI immer nur die erste Rufnummer erscheinen soll.

Bei einem Anruf zu der ersten Rufnummer im ersten Netz schaut eine erste Rufsteuerfunktion im ersten Netz in einer ersten lokalen Portierungsdatenbank eines ersten Netzbetreibers, in der steht, dass die erste Rufnummer portiert ist zum besagten zweiten Netz. Dies ist jedoch tatsächlich nicht der Fall, denn tatsächlich ist die erste Rufnummer im ersten Netz einem ersten Anschluss zugeordnet, und dies ist auch die Sicht aller anderen Netze. Der Anruf wird jedoch dennoch von einer ersten Rufsteuerfunktion im besagten ersten Netz zuerst zu einer zweiten Rufsteuerfunktion im besagten zweiten Netz geroutet, damit das zweite Netz eines zweiten Netzbetreibers ggf. eine Rufverzweigung (Parallel-Ringing) im zweiten Netz einleiten kann, die sowohl zu besagtem zweiten Anschluss im besagten zweiten Netz führt als auch zu besagtem ersten Anschluss im besagtem ersten Netz führt.

Die Rufsteuerfunktion kann durch den Inhaber der Rufnummer bzw. durch einen von diesem autorisierten Nutzer konfiguriert werden um einzustellen, ob der Anruf nur zum ersten Anschluss im ersten Netz, nur im zweiten Netz oder gleichzeitig in beiden Netzen zugestellt werden soll, oder ob er in eine Sprachbox zugestellt werden soll.

Wenn die zweite Rufsteuerfunktion einen Anruf oder eine Rufverzweigung (Call Leg) zur besagten ersten Rufnummer in besagtes erstes Netz sendet, erkennt die die erste Rufsteuerfunktion, dass sie die erste lokale Portierungsdatenbank nicht befragen muss, sondern den Anruf bzw. die Rufverzweigung (Call Leg) direkt an besagten ersten Anschluss zustellen kann.

Der Nutzer kann bestimmen, ob die erste oder die zweite Rufnummer immer als Anschlussidentifizierung (CLI) erscheint, unabhängig ob der Anruf vom ersten oder zweiten Anschluss originiert.

Der Nutzer kann dies ändern (z. B. über Anruf einer Dienstenummer oder Webportal oder ähnliches). Hierzu dann das Verfahren in mehrfachen Varianten betrachtet werden, als
- erstes Verfahren eines ersten Netzbetreibers
- zweites Verfahren eines zweiten Netzbetreiber
- Verfahren eines integrierten Netzbetreibers, der sowohl besagtes erstes Verfahren als auch besagtes zweites Verfahren anwendet
- erstes System eines ersten Netzbetreibers der fixed-mobile-konvergente Rufsteuerfunktion an einen zweiten Netzbetreiber delegiert
- zweites System eines zweiten Netzbetreibers, der fixed-mobile-konvergente Rufsteuerfunktion für einen ersten Netzbetreiber als Dienstleistung anbietet
- integriertes System bestehend aus besagtem ersten System als auch aus besagtem zweiten System
- erstes Geschäftsmodell eines ersten Netzbetreibers, der von einem zweiten Netzbetreiber eine fixed-mobile-konvergente Rufsteuerleistung als Vorleistung einkauft
- zweites Geschäftsmodell eines zweiten Netzbetreibers, der für einen ersten Netzbetreiber eine fixed-mobile-konvergente Rufsteuerfunktion als Dienstleistung anbietet
- Geschäftsmodell eines integrierten Netzbetreibers, der sowohl besagtes erstes als auch besagtes zweites Geschäftsmodell anwendet.

### Kurze Beschreibung der Zeichnung

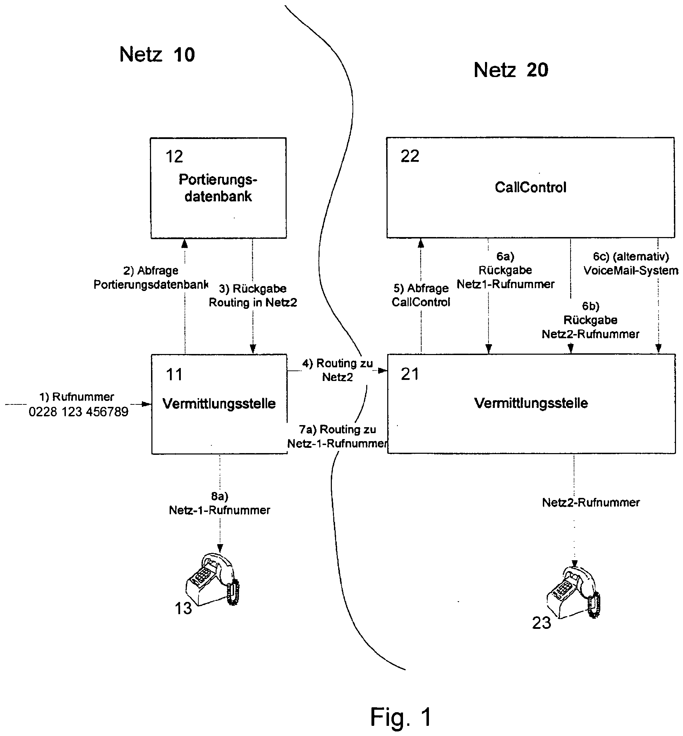

Figur 1 zeigt schematisch eine Anrufzustellung parallel in zwei Netzen nach dem erfindungsgemäßen Verfahren.

### Beschreibung eines Ausführungsbeispiels der Erfindung

Figur 1 zeigt schematisch zwei Kommunikationsnetze, Netz 10 und Netz 20. Das Netz 10 umfasst eine Vermittlungsstelle 11 und das Netz 20 eine Vermittlungsstelle 21, wobei die beiden Vermittlungsstellen 11, 21 über entsprechende Verbindungen untereinander Informationen austauschen können. Die Vermittlungsstelle 11 des ersten Netzes 10 ist mit einer Portierungsdatenbank 12 verbunden. Die Vermittlungsstelle 21 des zweiten Netzes 20 ist mit einer Rufsteuerfunktion 22 (Call Control) verbunden. In der Vermittlungsstelle 11 des ersten Netzes 10 trifft ein Anruf ein, der an eine konvergente Rufnummer, z. B. 0228 123 456789 gerichtet ist (Schritt 1).

Die konvergente Rufnummer ist z. B. eine Festnetzrufnummer und im Netz 10, das ein Festnetz ist, einem Festnetzanschluss 13 zugeordnet. Die konvergente Rufnummer ist aber gleichermaßen im Netz 20, das ein Mobilfunknetz sein kann, einem Mobilfunkanschluss 23 direkt oder indirekt zugeordnet. Die konvergente Festnetzrufnummer ist gleichzeitig in der Portierungsdatenbank 12 mit lokaler Signifikanz für besagtes Festnetz 10 als portiert gekennzeichnet, und zwar als portiert zu besagtem Mobilfunknetz 20. Ferner kann die konvergente Festnetzrufnummer in jedem anderen Netz sowie - sofern vorhanden - in einer zentralen Portierungsdatenbank mit globaler Signifikanz als besagtem Festnetz 10 zugeordnet gekennzeichnet sein.

Erfindungsgemäß wird nun vom Festnetz 10 vor der Zustellung des Anrufes zu der konvergenten Rufnummer die lokale Portierungsdatenbank 12 abgefragt (Schritt 2). Die Portierungsdatenbank 12 gibt eine Portierungskennung zurück (Schritt 3). Der Anruf wird dann aufgrund der Portierungskennung in das Mobilfunknetz 20 und zur zuständigen Vermittlungsstelle 21 geroutet (Schritt 4).

Die Vermittlungsstelle 21 verzweigt den Anruf in eine Rufsteuerfunktion 22 (Call Control) (Schritt 5). Die Rufsteuerungsfunktion 22 ist inhärent eine konvergente Rufsteuerungsfunktion, die sowohl auf die Rufsteuerung im Mobilfunknetz 20 als auch im Festnetz 10 wirkt. In der Rufsteuerfunktion 22 werden anhand der konvergenten Festnetzrufnummer die Rufnummern des Anschlusses 13 des Festnetzes 10 (Schritt 6a) sowie des Anschlusses 23 des Mobilfunknetzes 20 (Schritt 6b) ermittelt und an die Vermittlungsstelle 21 zurückgegeben.
Die Vermittlungsstelle 21 vermittelt den Anruf nun an den entsprechenden Anschluss 23. Gleichzeitig übermittelt sie die Rufnummer des Anschlusses 13 des Festnetzes 10 an die Vermittlungsstelle 11 des Festnetzes 10 (Schritt 7a). Die Vermittlungsstelle 11 erkennt, dass der Anruf von der Rufsteuerfunktion 22 des Mobilfunknetzes 20 kommt, und kann daraufhin den Anruf an den Festnetzanschluss 13 zustellen (Schritt 8a).

Erfindungsgemäß kann dem Mobilfunkanschluss 23 eine Mobilfunknummer zugeordnet sein, und bei Anrufen zu dieser Mobilfunknummer kann die Rufsteuerungsfunktion 22 den Anruf ebenfalls sowohl an den Mobilfunkanschluss 23 als auch an den Festnetzanschluss 13 zustellen.

Ein zusätzliches Merkmal besteht darin, dass die Rufsteuerungsfunktion 22 in dem Mobilfunknetz 20 eine Ansage steuert, die dem Anrufenden mitteilt, dass ein paralleler Zustellversuch durchgeführt wird
Ferner kann die Rufsteuerungsfunktion 22 im Mobilfunknetz 20 den Anruf an eine Sprachbox des Anschlusses 23 zustellen, wenn die Zustellversuche an den Festnetzanschluss 13 und/oder an den Mobilfunkanschluss 23 erfolglos bleiben (Schritt 6c). Die Zustellung des Anrufs an die Sprachbox kann nach einer vom Teilnehmer einstellbaren Zahl von Zustellversuchen (Anzahl Ringing) erfolgen.

Die Rufsteuerungsfunktion 22 kann durch den Inhaber der konvergenten Rufnummer kontrolliert werden. Die kann über den Festnetzanschluss 13, über den Mobilfunkanschluss 23 oder über ein Web Portal, Voice Portal, etc. erfolgen.
Der Inhaber der konvergenten Rufnummer und der Mobilfunkrufnummer des Mobilfunkanschlusses 23 oder ein von besagtem Inhaber autorisierter Nutzer kann die Rufsteuerungsfunktion 22 kontrollieren dergestalt, dass er z. B. Parallel Ringing einschalten und ausschalten kann, sowie bestimmen kann, ob bei einem Anruf für den Mobilfunkanschluss 23 der Anruf nur an den Anschluss 13 des Festnetzes 10 oder nur an den Anschluss 23 des Mobilfunknetzes 20 oder nur zur Sprachbox zugestellt werden soll. Ebenfalls kann er bestimmen ob bei einem Anruf zur besagten konvergenten Rufnummer der Anruf nur ins Festnetz oder nur ins Mobilfunknetz oder nur zur besagten Sprachbox zugestellt werden soll.

## Patentansprüche

1. Verfahren zur Herstellung eines fixed-mobile-konvergenten Telekommunikationsdienstes auf Basis eines konvergenten Anschlussnamens aus einem Namensraum, bei dem Anrufe gleichzeitig in ein erstes (10) und in ein zweites Kommunikationsnetz (20) zugestellt werden, wobei das erste Kommunikationsnetz (10) von einem ersten Netzbetreiber und das zweite Kommunikationsnetz (20) von einem zweiten Netzbetreiber betrieben werden, wobei,
- der konvergente Anschlussname ein erster Anschlussname ist und in dem ersten Kommunikationsnetz (10) einem ersten Anschluss (13) zugeordnet ist,
- der erste Anschlussname in dem zweiten Kommunikationsnetz (20) einem zweiten Anschluss (23) direkt oder indirekt zugeordnet ist,
- der erste Anschlussname gleichzeitig in einer lokalen Einrichtung zur Namensauflösung und Namenskennzeichnung für besagtes erstes Kommunikationsnetz (10) als portiert gekennzeichnet ist, und zwar als portiert zu dem zweiten Kommunikationsnetz (20),
- das erste Kommunikationsnetz (10) vor Zustellung eines Anrufs zu dem konvergenten Anschlussnamen die lokale Einrichtung zur Namensauflösung und Namenskennzeichnung (12) befragt, und aufgrund einer Portierungskennung den Anruf in das zweite Kommunikationsnetz (20) routet, und
- das zweite Kommunikationsnetz (20) den Anruf in eine Rufsteuerfunktion (22) verzweigt, wobei der Anruf gleichzeitig an den zweiten Anschluss (23) und an den ersten Anschluss (13) geleitet, zustellt oder geroutet wird, **dadurch gekennzeichnet, dass** die Rufsteuerungsfunktion (22) durch den Inhaber des konvergenten Anschlussnamens kontrolliert wird, wahlweise über den ersten Anschluss (13) oder über den zweiten Anschluss (23) oder über ein dafür eingerichtetes Web Portal oder Voice Portal.

2. Verfahren nach Anspruch 1, **dadurch gekennzeichnet, dass** der erste Anschlussname in jedem anderen Kommunikationsnetz sowie - sofern vorhanden - in einer zentralen Einrichtung zur Namensauflösung und Namenskennzeichnung mit globaler Signifikanz als dem ersten Kommunikationsnetz zugeordnet gekennzeichnet ist.

3. Verfahren nach Anspruch 1 oder 2, **dadurch gekennzeichnet, dass** die Rufsteuerungsfunktion (22) inhärent eine konvergente Rufsteuerungsfunktion ist, die sowohl auf die Rufsteuerung im ersten als auch im zweiten Kommunikationsnetz wirkt.

4. Verfahren nach Anspruch 1 bis 3, **dadurch gekennzeichnet, dass** das erste Kommunikationsnetz (10) erkennt, dass der Anruf von der Rufsteuerfunktion (22) des zweiten Kommunikationsnetzes (20) kommt, und das erste Kommunikationsnetz daraufhin den Anruf an den ersten Anschluss (13) zustellt.

5. Verfahren nach Anspruch 4, **dadurch gekennzeichnet, dass** das Erkennen auf der Auswertung einer speziellen Portierungskennung oder anderen ISUP-Feldern (z. B. OriginalCalledParty oder ähnliches) basiert.

6. Verfahren nach einem der Ansprüche 1 bis 5, **dadurch gekennzeichnet, dass** dem zweiten Anschluss (23) ein Anschlussname zugeordnet ist, und bei Anrufen zu diesem Anschlussnamen die Rufsteuerungsfunktion (22) den Anruf ebenfalls sowohl an den zweiten Anschluss (23) als auch an den ersten Anschluss (13) zustellt.

7. Verfahren nach einem der Ansprüche 1 bis 6, **dadurch gekennzeichnet, dass** die Rufsteuerungsfunktion (22) in dem zweiten Kommunikationsnetz (20) eine Mitteilung generiert, durch die dem Anrufenden mitgeteilt wird, dass ein paralleler Zustellversuch des Anrufs an beide Anschlüsse (13, 23) durchgeführt wird.

8. Verfahren nach einem der Ansprüche 1 bis 7, **dadurch gekennzeichnet, dass** die Rufsteuerungsfunktion (22) in dem zweiten Kommunikationsnetz (20) den Anruf an eine Sprachbox zustellt, wenn die Zustellversuche an den ersten Anschluss (13) und an den zweiten Anschluss (23) erfolglos bleiben

9. Verfahren nach Anspruch 8, **dadurch gekennzeichnet, dass** die Zustellung an die Sprachbox nach einer vom Inhaber des konvergenten Anschlussnamens einstellbaren Zahl von Zustellversuchen (Anzahl Ringing) erfolgt.

10. Verfahren nach einem der Ansprüche 1 bis 9, **dadurch gekennzeichnet, dass** der Inhaber des konvergenten ersten Anschlussnamens und des zweiten Anschlussnamens oder ein von dem Inhaber autorisierter Nutzer die Rufsteuerungsfunktion (22) kontrollieren kann dergestalt, dass er Parallel Ringing einschalten und ausschalten kann, sowie bestimmen kann, ob bei einem Anruf zum zweiten Anschlussnamen der Anruf nur zum Anschluss (13) im ersten Kommunikationsnetz (10) oder nur zum Anschluss (23) im zweiten Kommunikationsnetz (20) oder nur zur Sprachbox zugestellt werden soll.

11. Verfahren nach einem der Ansprüche 1 bis 10, **dadurch gekennzeichnet, dass** der Inhaber des konvergenten ersten Anschlussnamens und des zweiten Anschlussnamens oder ein von dem Inhaber autorisierter Nutzer die Rufsteuerungsfunktion (22) kontrollieren kann dergestalt, dass er Parallel Ringing einschalten und ausschalten kann, sowie bestimmen kann, ob bei einem Anruf zum konvergenten ersten Anschlussnamen der Anruf nur zum Anschluss (13) im ersten Kommunikationsnetz oder nur zum Anschluss (23) im zweiten Kommunikationsnetz oder nur zur Sprachbox zugestellt werden soll.

12. Verfahren nach einem der Ansprüche 1 bis 11, **dadurch gekennzeichnet, dass** das erste (10) und das zweite Kommunikationsnetz (20) dieselbe Länderkennung (CC: Country Code) haben.

13. Verfahren nach einem der Ansprüche 1 bis 12, **dadurch gekennzeichnet, dass** das erste Kommunikationsnetz (10) ein Festnetz, der erste Netzbetreiber ein Festnetzbetreiber, das zweite Kommunikationsnetz (20) ein Mobilfunknetz, der zweite Netzbetreiber ein Mobilfunknetzbetreiber, der erste Anschlussname eine Festnetznummer und der zweite Anschlussname eine Mobilfunknummer ist.

14. Verfahren nach einem der Ansprüche 1 bis 12, **dadurch gekennzeichnet, dass** das erste Kommunikationsnetz (10) ein Mobilfunknetz, der erste Netzbetreiber ein Mobilfunknetzbetreiber, das zweite Kommunikationsnetz (20) ein Festnetz, der zweite Netzbetreiber ein Festnetzbetreiber, der erste Anschlussname eine Mobilfunknummer und der zweite Anschlussname eine Festnetznummer ist.

15. Verfahren nach einem der Ansprüche 1 bis 12, **dadurch gekennzeichnet, dass** das erste Kommunikationsnetz (10) ein Festnetz, der erste Netzbetreiber ein Festnetzbetreiber, das zweite Kommunikationsnetz (20) ein Mobilfunknetz, der zweite Netzbetreiber ein Mobilfunknetzbetreiber, der erste Anschlussname eine konvergente Rufnummer, die gleichzeitig dem Mobilfunknetz als auch dem Festnetz zuzuordnen ist, der zweite Anschlussname eine Mobilfunknummer ist.

16. Verfahren nach einem der Ansprüche 1 bis 12, **dadurch gekennzeichnet, dass** das erste Kommunikationsnetz (10) ein Mobilfunknetz, der erste Netzbetreiber ein Mobilfunknetzbetreiber, das zweite Kommunikationsnetz (20) ein Festnetz, der zweite Netzbetreiber ein Festnetzbetreiber, der erste Anschlussname eine konvergente Rufnummer, die gleichzeitig dem Mobilfunknetz als auch dem Festnetz zuzuordnen ist, und der zweite Anschlussname eine Festnetznummer ist.

17. Verfahren nach einem der Ansprüche 1 bis 16, **dadurch gekennzeichnet, dass** der Namensraum für die Anschlussnamen den E.164 Rufnummernplan umfasst und die Menge aller möglichen Telefon-Rufnummern umfasst.

18. Verfahren nach einem der Ansprüche 1 bis 16, **dadurch gekennzeichnet, dass** der Namensraum für die Anschlussnamen die Menge aller theoretisch möglichen SIP URIs (SIP = Session Initiation Protocol, URI = Uniform Resource Identifier) umfasst, wodurch der Anschlussnamen eine SIP URI wird.

19. Verfahren nach einem der Ansprüche 1 bis 16, **dadurch gekennzeichnet, dass** der Namensraum für die Anschlussnamen die Menge aller theoretisch möglichen Tel URIs umfasst, wodurch der Anschlussnamen eine Tel-URI wird.

20. Verfahren nach einem der Ansprüche 1 bis 19, **dadurch gekennzeichnet, dass** der Anschlussnamen mit einem Dienst zur Namensauflösung und Namenskennzeichnung unter Nutzung der Einrichtung zur Namensauflösung und Namenskennzeichnung (12) aufgelöst und gekennzeichnet wird, dergestalt dass eine Zuordnung des Anschlussnamens erfolgt zu demjenigen Kommunikationsnetz, dem der Anschlussnamen aktuell zugeordnet ist.

21. Verfahren nach Anspruch 20, **dadurch gekennzeichnet, dass** der Dienst zur Namensauflösung und Namenskennzeichnung der Dienst eines Portierungsdatenbankservers (12) ist.

22. Verfahren nach Anspruch 20, **dadurch gekennzeichnet, dass** der Dienst zur Namensauflösung und Namenskennzeichnung der Dienst eines ENUM (tElephone NUmber Mapping) Servers ist.

23. Verfahren nach Anspruch 20, **dadurch gekennzeichnet, dass** der Dienst zur Namensauflösung und Namenskennzeichnung der Dienst eines DNS (Domain Name System) Servers ist.

24. Verfahren nach einem der Ansprüche 20 bis 23, **dadurch gekennzeichnet, dass** durch einmalige oder mehrmalige Namensauflösung und Namenskennzeichnung der physikalische Anschluss (13, 23) ermittelt wird, zu dem der Anruf zugestellt werden soll.

25. Vorrichtung zur Durchführung des Verfahrens gemäß den Ansprüchen 1 bis 24, **gekennzeichnet durch** eine in das erste Kommunikationsnetz eingebundene Einrichtung zur Namensauflösung und Namenskennzeichnung (12) und eine konvergente Rufsteuerungsfunktion (22), die sowohl auf die Rufsteuerung im ersten (10) als auch im zweiten Kommunikationsnetz (20) wirkt.

## Claims

1. Method for producing a fixed-mobile convergent telecommunications service based on a convergent connection name from a name space, in which calls are simultaneously delivered to a first communications network (10) and to a second communications network (20), wherein the first communications network (10) is operated by a first network operator and the second communications network (20) is operated by a second network operator, wherein
- the convergent connection name is a first connection name and is assigned to a first connection (13) in the first communications network (10),
- the first connection name in the second communications network (20) is assigned directly or indirectly to a second connection (23),
- the first connection name is simultaneously identified as ported in a local unit for name resolution and name identification for said first communications network, and specifically as ported to the second communications network (20),
- before delivering a call to the convergent connection name the first communications network (10) interrogates the local unit for name resolution and name identification (12) and on the basis of a porting code routes the call to the second communications network (20), and
- the second communications network (20) branches the call to a call control function (22), wherein the call is simultaneously forwarded, delivered or routed to the second connection (23) and to the first connection (13),
**characterised in that** the call control function (22) is controlled by the owner of the convergent connection name, optionally via the first connection (13) or via the second connection (23) or via a web portal or voice portal set up for this purpose.

2. Method according to claim 1, **characterised in that** the first connection name is identified in every other communications network and - when present - in a central unit for name resolution and name identification with global significance as being assigned to the first communications network.

3. Method according to claim 1 or 2, **characterised in that** the call control function (22) is inherently a convergent call control function which affects the call control both in the first and in the second communications network.

4. Method according to claims 1 to 3, **characterised in that** the first communications network (10) recognises that the call is coming from the call control function (22) of the second communications network (20), and the first communications network then delivers the call to the first connection (13).

5. Method according to claim 4, **characterised in that** the recognition is based on the evaluation of a specific porting code or other ISUP fields (e.g. OriginalCalledParty or the like).

6. Method according to one of claims 1 to 5, **characterised in that** a connection name is assigned to the second connection (23), and with calls to this connection name the call control function (22) also delivers the call both to the second connection (23) and to the first connection (13).

7. Method according to one of claims 1 to 6, **characterised in that** the call control function (22) in the second communications network (20) generates a message through which the caller is informed that a parallel attempt is being made to deliver the call to both connections (13, 23).

8. Method according to one of claims 1 to 7, **characterised in that** the call control function (22) in the second communications network (20) delivers the call to a voice mail box when the attempts to deliver the call to the first connection (13) and to the second connection (23) remain unsuccessful.

9. Method according to claim 8, **characterised in that** the delivery to the voice mail box is made after a number of attempts at delivery (ringing number) that can be set by the owner of the convergent connection name.

10. Method according to one of claims 1 to 9, **characterised in that** the owner of the convergent first connection name and of the second connection name or a user authorised by the owner can control the call control function (22) in such a way that he can switch on and switch off parallel ringing, and can determine whether with a call to the second connection name the call is to be delivered only to the connection (13) in the first communications network (10) or only to the connection (23) in the second communications network (20) or only to the voice mail box.

11. Method according to one of claims 1 to 10, **characterised in that** the owner of the convergent first connection name and of the second connection name or a user authorised by the owner can control the call control function (22) in such a way that he can switch on and switch off parallel ringing, and can determine whether with a call to the convergent first connection name the call is to be delivered only to the connection (13) in the first communications network or only to the connection (23) in the second communications network or only to the voice mail box.

12. Method according to one of claims 1 to 11, **characterised in that** the first communications network (10) and the second communications network (20) have the same country code (CC).

13. Method according to one of claims 1 to 12, **characterised in that** the first communications network (10) is a fixed network, the first network operator is a fixed network operator, the second communications network (20) is a mobile radio telephone network, the second network operator is a mobile radio telephone network operator, the first connection name is a fixed network number and the second connection name is a mobile radio telephone number.

14. Method according to one of claims 1 to 12, **characterised in that** the first communications network (10) is a mobile radio telephone network, the first network operator is a mobile radio telephone network operator, the second communications network (20) is a fixed network, the second network operator is a fixed network operator, the first connection name is a mobile radio telephone number and the second connection name is a fixed network number.

15. Method according to one of claims 1 to 12, **characterised in that** the first communications network (10) is a fixed network, the first network operator is a fixed network operator, the second communications network (20) is a mobile radio telephone network, the second network operator is a mobile radio telephone network operator, the first connection name is a convergent call number which is simultaneously to be assigned to both the mobile radio telephone network and also the fixed network, the second connection name is a mobile radio telephone number.

16. Method according to one of claims 1 to 12, **characterised in that** the first communications network (10) is a mobile radio telephone network, the first network operator is a mobile radio telephone network operator, the second communications network (20) is a fixed network, the second network operator is a fixed network operator, the first connection name is a convergent call number which is simultaneously to be assigned to both the mobile radio telephone network and also the fixed network, and the second connection name is a fixed network number.

17. Method according to one of claims 1 to 16, **characterised in that** the name space for the connection names comprises the E.164 call number plan and comprises the sum of all possible telephone call numbers.

18. Method according to one of claims 1 to 16, **characterised in that** the name space for the connection names comprises the sum of all theoretically possible SIP URIs (SIP = Session Initiation Protocol, URI = Uniform Resource Identifier), through which the connection name becomes an SIP URI.

19. Method according to one of claims 1 to 16, **characterised in that** the name space for the connection names comprises the sum of all theoretically possible Tel URIs, through which the connection name becomes a Tel URI.

20. Method according to one of claims 1 to 19, **characterised in that** the connection name is resolved and identified with a service for name resolution and name identification using the unit for name resolution and name identification (12) in such a way that the connection name is assigned to the communications network to which the connection name is currently assigned.

21. Method according to claim 20, **characterised in that** the service for name resolution and name identification is the service of a porting database server (12).

22. Method according to claim 20, **characterised in that** the service for name resolution and name identification is the service of an ENUM (tElephone NUmber Mapping) server.

23. Method according to claim 20, **characterised in that** the service for name resolution and name identification is the service of a DNS (Domain Name System) server.

24. Method according to one of claims 20 to 23, **characterised in that** single or multiple name resolution and name identification is used to determine the physical connection (13, 23) to which the call is to be delivered.

25. Device for implementing the method according to claims 1 to 24, **characterised by** a system for name resolution and name identification (12) integrated in the first communications network and a convergent call control function (22) which affects the call control both in the first communications network (10) and in the second communications network (20).

## Revendications

1. Procédé pour réaliser un service de télécommunication à convergence fixe mobile sur la base d'un nom de ligne convergent, à partir d'un espace de nom, selon lequel les appels sont transmis en même temps à des premier (10) et second (20) réseaux de communication (20), le premier réseau de communication (10) étant exploité par un premier exploitant de réseau, et le second réseau de communication (20) par un second exploitant de réseau,
- le nom de ligne convergent étant un premier nom de ligne et étant attribué dans le premier réseau de communication (10) à une première ligne (13),
- le premier nom de ligne étant attribué dans le second réseau de communication (20) directement ou indirectement à une seconde ligne (23),
- le premier nom de ligne étant identifié en même temps, dans un dispositif local pour la résolution et l'identification de nom pour ledit premier réseau de communication (10), comme transféré, à savoir comme transféré vers le second réseau de communication (20),
- le premier réseau de communication (10), avant la transmission d'un appel au nom de ligne convergent, interrogeant le dispositif local pour la résolution et l'identification de nom (12) et, à partir d'une identification de transfert, acheminant l'appel jusqu'au second réseau de communication (20), et
- le second réseau de communication (20) renvoyant l'appel à une fonction de commande d'appel (22), l'appel étant en même temps amené, transmis ou acheminé jusqu'à la seconde ligne (23) et à la première ligne (13),
**caractérisé en ce que** la fonction de commande d'appel (22) est contrôlée par le titulaire du nom de ligne convergent, sélectivement par l'intermédiaire de la première ligne (13) ou de la seconde ligne (23), ou d'un portail Internet ou d'un portail vocal installés à cet effet.

2. Procédé selon la revendication 1, **caractérisé en ce que** le premier nom de ligne, dans n'importe quel autre réseau de communication et - s'il y en a un - dans un dispositif central pour la résolution et l'identification de nom, est identifié avec une signification globale comme étant attribué au premier réseau de communication.

3. Procédé selon la revendication 1 ou 2, **caractérisé en ce que** la fonction de commande d'appel (22) est de manière inhérente une fonction de commande d'appel convergent qui agit aussi bien sur la commande d'appel dans le premier et dans le second réseau de communication.

4. Procédé selon la revendication 1 à 3, **caractérisé en ce que** le premier réseau de communication (10) détecte que l'appel vient de la fonction de commande d'appel (22) du réseau de communication (20), et le premier réseau de communication transmet alors l'appel à la première ligne (13).

5. Procédé selon la revendication 4, **caractérisé en ce que** la détection est basée sur l'analyse d'une identification de transfert spéciale ou sur d'autres champs SSUR (par exemple appelé original ou autre).

6. Procédé selon l'une des revendications 1 à 5, **caractérisé en ce qu'**un nom de ligne est attribué à la seconde ligne (23), et lors d'appels vers ce nom de ligne, la fonction de commande d'appel (22), là aussi, transmet l'appel aussi bien à la seconde ligne (23) qu'à la première ligne (13).

7. Procédé selon l'une des revendications 1 à 6, **caractérisé en ce que** la fonction de commande d'appel (22) génère dans le second réseau de communication (20) une notification grâce à laquelle il est notifié à l'appelant qu'un essai de transmission parallèle de l'appel aux deux lignes (13, 23) est réalisé.

8. Procédé selon l'une des revendications 1 à 7, **caractérisé en ce que** la fonction de commande d'appel (22) transmet dans le second réseau de communication (20) l'appel à une boîte vocale si les essais de transmission à la première ligne (13) et à la seconde ligne (23) restent sans succès.

9. Procédé selon la revendication 8, **caractérisé en ce que** la transmission à la boîte vocale se fait après un nombre d'essais de transmission qui est réglable par le titulaire du nom de ligne convergent (nombre de sonneries).

10. Procédé selon l'une des revendications 1 à 9, **caractérisé en ce que** le titulaire du premier nom de ligne convergent et du second nom de ligne, ou un utilisateur autorisé par le titulaire, peut contrôler la fonction de commande d'appel (22) de telle sorte qu'il peut activer et désactiver la sonnerie parallèle, et peut aussi définir si, lors d'un appel vers le second nom de ligne, l'appel ne doit être transmis qu'à la ligne (13) dans le premier réseau de communication (10) ou qu'à la ligne (23) dans le second réseau de communication (20) ou qu'à la boîte vocale.

11. Procédé selon l'une des revendications 1 à 10, **caractérisé en ce que** le titulaire du premier nom de ligne convergent et du second nom de ligne, ou un utilisateur autorisé par le titulaire, peut contrôler la fonction de commande d'appel (22) de telle sorte qu'il peut activer et désactiver la sonnerie parallèle, et peut aussi définir si, lors d'un appel vers le premier nom de ligne convergent, l'appel ne doit être transmis qu'à la ligne (13) dans le premier réseau de communication ou qu'à la ligne (23) dans le second réseau de communication ou qu'à la boîte vocale.

12. Procédé selon l'une des revendications 1 à 11, **caractérisé en ce que** les premier (10) et second (20) réseaux de communication ont le même indicatif de pays (CC : Country Code).

13. Procédé selon l'une des revendications 1 à 12, **caractérisé en ce que** le premier réseau de communication (10) est un réseau fixe, le premier exploitant de réseau est un exploitant de réseau fixe, le second réseau de communication (20) est un réseau mobile, le second exploitant de réseau est un exploitant de réseau mobile, le premier nom de ligne est un numéro de réseau fixe, et le second nom de ligne est un numéro de mobile.

14. Procédé selon l'une des revendications 1 à 12, **caractérisé en ce que** le premier réseau de communication (10) est un réseau mobile, le premier exploitant de réseau est un exploitant de réseau mobile, le second réseau de communication (20) est un réseau fixe, le second exploitant de réseau est un exploitant de réseau fixe, le premier nom de ligne est un numéro de réseau mobile, et le second nom de ligne est un numéro de réseau fixe.

15. Procédé selon l'une des revendications 1 à 12, **caractérisé en ce que** le premier réseau de communication (10) est un réseau fixe, le premier exploitant de réseau est un exploitant de réseau fixe, le second réseau de communication (20) est un réseau mobile, le second exploitant de réseau est un exploitant de réseau mobile, le premier nom de ligne est un numéro d'appel convergent qui est à attribuer en même temps au réseau mobile et au réseau fixe, le second nom de ligne est un numéro de mobile.

16. Procédé selon l'une des revendications 1 à 12, **caractérisé en ce que** le premier réseau de communication (10) est un réseau mobile, le premier exploitant de réseau est un exploitant de réseau mobile, le second réseau de communication (20) est un réseau fixe, le second exploitant de réseau est un exploitant de réseau fixe, le premier nom de ligne est un numéro d'appel convergent qui est à attribuer en même temps au réseau mobile et au réseau fixe, et le second nom de ligne est un numéro de réseau fixe.

17. Procédé selon l'une des revendications 1 à 16, **caractérisé en ce que** l'espace de nom pour les noms de ligne comprend le plan de numérotation E.164, et comprend l'ensemble de tous les numéros d'appel téléphonique possibles.

18. Procédé selon l'une des revendications 1 à 16, **caractérisé en ce que** l'espace de nom pour les noms de ligne comprend l'ensemble de tous les SIP URI théoriquement possibles (SIP = Session Initiation Protocol, soit protocole d'ouverture de session, URI = Uniform Resource Identifier, soit identifiant uniforme de ressource), moyennant quoi le nom de ligne devient un SIP URI.

19. Procédé selon l'une des revendications 1 à 16, **caractérisé en ce que** l'espace de nom pour tous les noms de ligne comprend l'ensemble de tous les Tel-URI théoriquement possibles, moyennant quoi le nom de ligne devient un Tel-URI.

20. Procédé selon l'une des revendications 1 à 19, **caractérisé en ce que** le nom de ligne est résolu et identifié avec un service de résolution et d'identification de nom à l'aide du dispositif de résolution et d'identification de nom, de telle sorte qu'il y ait une attribution du nom de ligne au réseau de communication auquel le nom de ligne est actuellement attribué.

21. Procédé selon la revendication 20, **caractérisé en ce que** le service de résolution et d'identification de nom est le service d'un serveur de banque de données de transfert (12).

22. Procédé selon la revendication 20, **caractérisé en ce que** le service de résolution et d'identification de nom est le service d'un serveur ENUM (tElephone NUmber Mapping, soit mappage des numéros de téléphone).

23. Procédé selon la revendication 20, **caractérisé en ce que** le service de résolution et d'identification de nom est le service d'un serveur DNS (Domain Name System, soit système de noms de dominé).

24. Procédé selon l'une des revendications 20 à 23, **caractérisé en ce que** grâce à une résolution et une identification de nom uniques ou répétées, la ligne physique (13, 23) à laquelle l'appel doit être transmis est déterminée.

25. Dispositif pour la mise en ouvre du procédé selon les revendications 1 à 24, **caractérisé par** un dispositif de résolution et d'identification de nom (12) intégré au premier réseau de communication, et par une fonction de commande d'appel convergente (22) qui agit aussi bien sur la commande d'appel dans le premier (10) et dans le second (20) réseau de communication.
